# EUROPEAN PATENT APPLICATION

(11) **EP 4 760 920 A1**
(43) Date of publication of application: **17.06.2026**
(21) Application number: 25797669.6
(22) Date of filing: 25.04.2025
(51) Int. Cl.: H01M 50/242, H01M 50/291, H01M 10/6551, H01M 50/204

(54) **BATTERY PACK**

(30) Priority: 30.04.2024 KR 20240057780
(71) Applicant: LG Energy Solution, Ltd., Seoul 07335 (KR)
(72) Inventor: KIM, Min Bum, Daejeon 34122 (KR); JANG, Byung Do, Daejeon 34122 (KR); KIM, Min Gu, Daejeon 34122 (KR)
(74) Representative: Plasseraud IP
(86) International application number: PCT/KR2025/005615
(87) International publication number: WO 2025/230231

(57) **Abstract**

The present disclosure provides a battery pack. The battery pack includes a base frame, an inner frame extending on the base frame in a first direction, a first cell assembly including a plurality of first battery cells and a first side beam, and a second cell assembly including a plurality of second battery cells and a second side beam, and the inner frame includes a first groove into which the first insertion block is inserted and a second groove into which the second insertion block is inserted.

## Description

### [Technical Field]

The present disclosure relates to a battery pack.

This application claims the benefit of priority based on Korean Patent Application No. 10-2024-0057780, filed on April 30, 2024, and the entire content of the Korean patent application is incorporated herein by reference.

### [Background Art]

Secondary batteries can be charged and discharged a plurality of times unlike primary batteries. Secondary batteries are widely used as energy sources for various types of wireless devices such as handsets, laptop computers, and cordless vacuum cleaners. Recently, the main use of secondary batteries is moving from mobile devices to mobility, as manufacturing costs per unit capacity of secondary batteries drastically decrease due to improvements in energy density and economies of scale and a range of battery electric vehicles (BEVs) increases to the same level as fuel vehicles.

As secondary batteries are used for mobility, the demand for the safety of secondary batteries is increasing. A driver's life may be in danger when an accident such as fire occurs in a secondary battery used for mobility and thus research on technology for enhancing the safety of secondary batteries is indispensable.

### [Disclosure]

### [Technical Problem]

The present disclosure is directed to providing a battery pack.

### [Technical Solution]

An aspect of the present disclosure provides a battery pack including: a base frame; an inner frame extending on the base frame in a first direction; a first cell assembly including a plurality of first battery cells and a first side beam, in which the first side beam includes a first support plate facing a first side surface of the inner frame and a first insertion block connected to the first support plate; and a second cell assembly including a plurality of second battery cells and a second side beam, in which the second side beam includes a second support plate facing a second side surface of the inner frame and a second insertion block connected to the second support plate. The inner frame includes a first groove which extends from the first side surface of the inner frame and into which the first insertion block is inserted, and a second groove which extends from the second side surface of the inner frame and into which the second insertion block is inserted.

In embodiments, the plurality of first battery cells may be arranged in a second direction perpendicular to the first direction, and the plurality of second battery cells may be arranged in the second direction.

In embodiments, the first support plate of the first side beam may be attached to an outermost first battery cell among the plurality of first battery cells, and the second support plate of the second side beam may be attached to an outermost second battery cell among the plurality of second battery cells.

In embodiments, the inner frame may have a bottom surface in contact with the base frame and a top surface opposite to the bottom surface, and each of the first groove and the second groove of the inner frame may extend from the bottom surface of the inner frame to the top surface of the inner frame.

In embodiments, the first groove and the second groove of the inner frame may be spaced apart from each other in the first direction.

In embodiments, a width of the first groove of the inner frame in the first direction may increase as a distance from the first side surface of the inner frame increases, and a width of the second groove of the inner frame in the first direction may increase as a distance from the second side surface of the inner frame increases.

In embodiments, in the first groove of the inner frame, a width of the first insertion block in the first direction may increase as a distance from the first support plate increases, and in the second groove of the inner frame, a width of the second insertion block in the first direction may increase as a distance from the second support plate increases.

In embodiments, the inner frame may include first support surfaces supporting both sides of the first insertion block in the first direction, and second support surfaces supporting both sides of the second insertion block in the first direction.

In embodiments, the inner frame may further include a third support surface supporting a side portion of the first insertion block opposite to the first support plate, and a fourth support surface supporting a side portion of the second insertion block opposite to the second support plate.

In embodiments, the battery pack may further include a first bolt configured to fasten the first insertion block to the base frame, and a second bolt configured to fasten the second insertion block to the base frame.

In embodiments, the first bolt may be spaced apart from the inner frame with the first insertion block therebetween, and the second bolt may be spaced apart from the inner frame with the second insertion block therebetween.

In embodiments, the inner frame may further include an inner space extending in the first direction, and the first groove and the second groove of the inner frame may communicate with the inner space of the inner frame.

In embodiments, the first side beam may be a single integrated structure in which the first support plate and the first insertion block are integrally formed, and the second side beam may be a single integrated structure in which the second support plate and the second insertion block are integrally formed.

In embodiments, the battery pack may further include a first thermally conductive adhesive layer configured to attach the plurality of first battery cells to the base frame, and a second thermally conductive adhesive layer configured to attach the plurality of second battery cells to the base frame.

In embodiments, the battery pack may further include a side frame provided on the base frame and connected to the inner frame, and a pack cover configured to cover the first cell assembly and the second cell assembly and to be fastened to the side frame.

### [Advantageous Effects]

According to embodiments of the present disclosure, a side beam of a cell assembly can be assembled to an inner frame inside a pack frame by interference fit. The side beam of the cell assembly and the inner frame can be assembled together without a fastening member such as a bolt, thus facilitating the assembling of a battery pack.

According to embodiments of the present disclosure, the inner frame of the pack frame is in surface contact with the side beam of the cell assembly to support the side beam of the cell assembly in a lateral direction, thereby preventing or suppressing damage to the side beam due to an external force applied due to the swelling of battery cells. Because damage to components in the battery pack can be prevented or suppressed, the reliability and safety of the battery pack may be improved.

According to embodiments of the present disclosure, the inner frame of the pack frame is in surface contact with the side beam of the cell assembly to support the side beam of the cell assembly in the lateral direction, and thus, a force applied between the side beam of the cell assembly and the inner frame can be dispersed during the mounting of the cell assembly on the pack frame and the side beam can be prevented or suppressed from being damaged during the mounting of the cell assembly on the pack frame. The reliability and safety of the battery pack can be improved by preventing or suppressing damage to the components in the battery pack.

Effects achievable from embodiments of the present disclosure are not limited to the above-described effects, and other effects that are not described herein will be clearly derived and understood by those of ordinary skill in the art to which the embodiments of the present disclosure pertain from the following description. That is, unintended effects achieved when the embodiments of the present disclosure are implemented are derivable by those of ordinary skill in the art from the embodiments of the present disclosure.

### [Brief Description of the Drawings]

FIG. 1 is a perspective view of a part of a battery pack according to embodiments of the present disclosure.
FIG. 2 is an exploded perspective view of a part of a battery pack according to embodiments of the present disclosure.
FIG. 3 is a cross-sectional view of a battery pack taken along line III-III' of FIG. 1.
FIG. 4 is a cross-sectional view of the battery pack taken along line IV-IV' of FIG. 1.
FIG. 5 is a cross-sectional view of the battery pack taken along line V-V' of FIG. 1.
FIG. 6 is a cross-sectional view of the battery pack taken along line VI-VI' of FIG. 5.
FIGS. 7a to 7c are cross-sectional views illustrating a manufacturing method of a battery pack according to embodiments of the present disclosure.

### [Best Mode]

Hereinafter, embodiments of the present disclosure will be described in detail with reference to the accompanying drawings. Before describing embodiments of the present disclosure, the terms or expressions used in the present specification and claims should not be construed as being limited to as generally understood or as defined in commonly used dictionaries, and should be understood according to meanings and concepts corresponding to the present disclosure on the basis of the principle that the inventor(s) of the application can appropriately define the terms or expressions to optimally explain the present disclosure.

Therefore, embodiments set forth herein and configurations illustrated in the drawings are only examples of the present disclosure and do not reflect all the technical ideas of the present disclosure and thus it should be understood that various equivalents and modifications that replace the configurations would have been made at the filing date of the present application.

Well-known configurations or functions related to describing the present disclosure are not described in detail when it is determined that they would obscure the subject matter of the present disclosure due to unnecessary detail.

Because embodiments of the present disclosure are provided to more fully explain the present disclosure to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

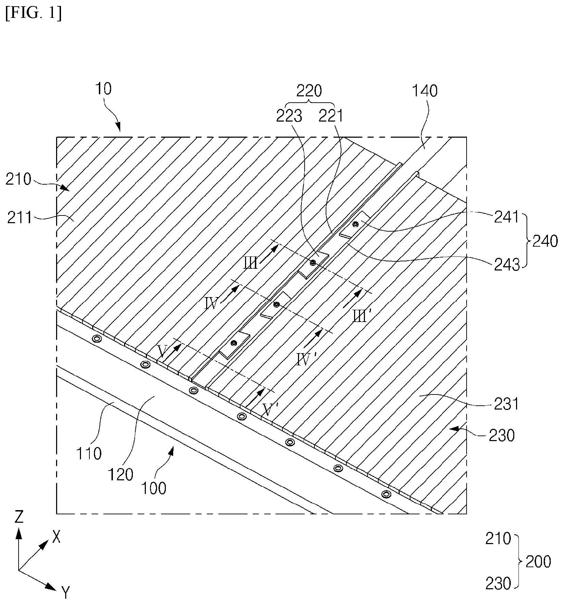

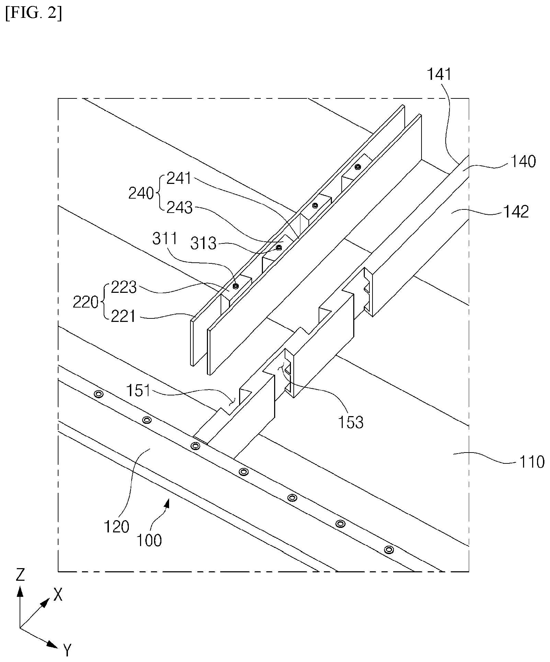

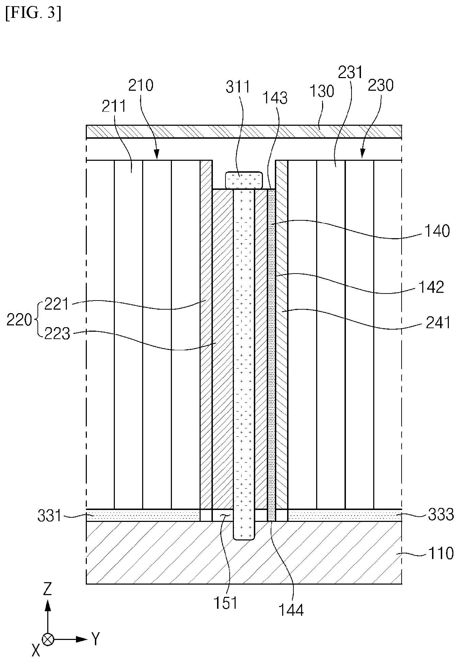

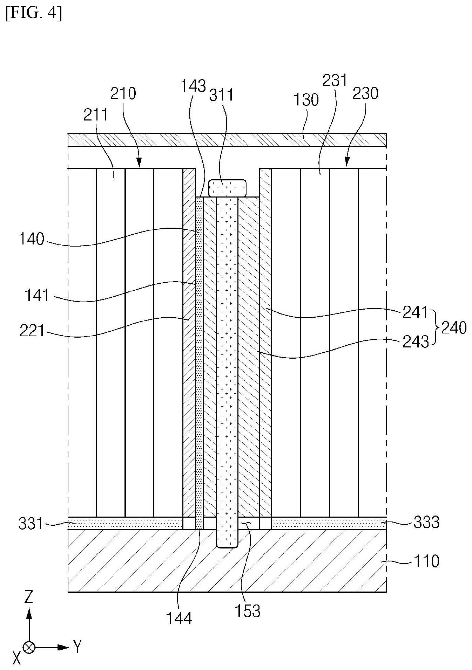

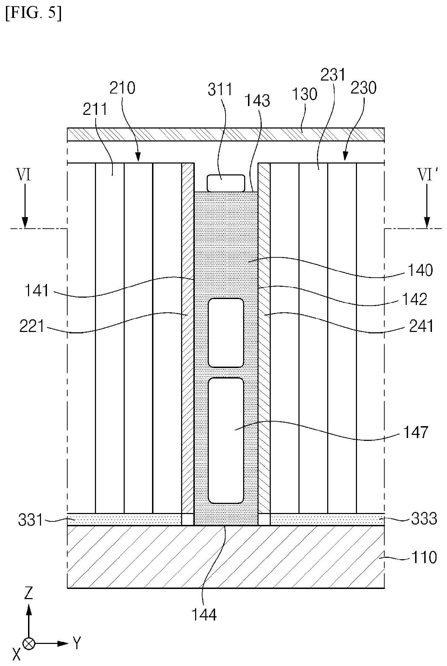

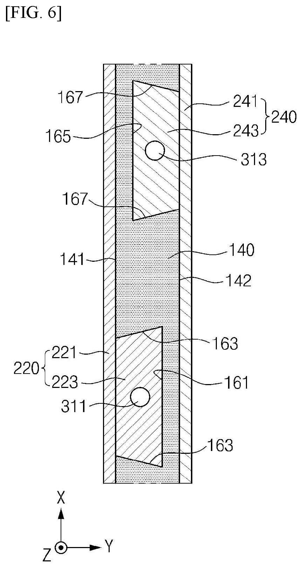

FIG. 1 is a perspective view of a part of a battery pack 10 according to embodiments of the present disclosure. FIG. 2 is an exploded perspective view of a part of the battery pack 10 according to embodiments of the present disclosure. FIG. 3 is a cross-sectional view of the battery pack 10 taken along line III-III' of FIG. 1. FIG. 4 is a cross-sectional view of the battery pack 10 taken along line IV-IV' of FIG. 1. FIG. 5 is a cross-sectional view of the battery pack 10 taken along line V-V' of FIG. 1. FIG. 6 is a cross-sectional view of the battery pack 10 taken along line VI-VI' of FIG. 5.

Referring to FIGS. 1 to 6, the battery pack 10 may include a pack frame 100 and a plurality of cell assemblies 200.

The pack frame 100 may provide an internal space for accommodating the plurality of cell assemblies 200. The plurality of cell assemblies 200 may be accommodated in the inner space of the pack frame 100. The pack frame 100 may include a base frame 110, a side frame 120, a pack cover 130, and an inner frame 140.

The base frame 110 may support the plurality of cell assemblies 200. The base frame 110 may have a flat plate shape extending approximately in a first horizontal direction (e.g., an X-axis direction) and a second horizontal direction (e.g., a Y-axis direction). The plurality of cell assemblies 200 may be arranged on the base frame 110 in the first horizontal direction (e.g., the X-axis direction) and/or the second horizontal direction (e.g., the Y-axis direction).

The base frame 110 may include a cooling channel configured to allow a cooling fluid to flow therethrough. A cooling fluid provided from the outside of the base frame 110 may be supplied to an inlet of the cooling channel, flow along the cooling channel, and be discharged to the outside through an outlet of the cooling channel. While the cooling fluid flows along the cooling channel, the cell assemblies 200 may be cooled. The cooling fluid may include a coolant and/or a refrigerant.

The side frame 120 may extend along a perimeter of the base frame 110. For example, the side frame 120 may have a quadrangular ring shape extending along the perimeter of the base frame 110. The side frame 120 may surround the plurality of cell assemblies 200 on the base frame 110.

The pack cover 130 may be fastened onto the side frame 120 to cover the plurality of cell assemblies 200. The pack cover 130 may have a flat plate shape extending in the first horizontal direction (e.g., the X-axis direction) and the second horizontal direction (e.g., the Y-axis direction).

The inner frame 140 may be provided on the base frame 110. The inner frame 140 may be coupled to the base frame 110 by welding or a fastening member such as bolts. A bottom surface 144 of the inner frame 140 may be connected to the base frame 110. The inner frame 140 may extend in the first horizontal direction (e.g., the X-axis direction), and both ends of the inner frame 140 in the first horizontal direction (e.g., the X-axis direction) may be coupled to the side frame 120. The inner frame 140 may divide or separate the inner space of the pack frame 100 into a plurality of accommodation spaces. At least one cell assembly 200 may be provided in each of the plurality of accommodation spaces of the pack frame 100 provided by the inner frame 140.

The pack frame 100 may include a plurality of inner frames 140 spaced apart from each other. The plurality of inner frames 140 may be spaced apart from each other in the second horizontal direction (e.g., the Y-axis direction) and may each extend in the first horizontal direction (e.g., the X-axis direction). One cell assembly 200 may be provided between two neighboring inner frames 140 in the second horizontal direction (e.g., the Y-axis direction).

Each of the plurality of cell assemblies 200 may include a plurality of battery cells. Each of the battery cells is a basic unit of a lithium ion battery, i.e., a secondary battery. Each of the battery cells may include an electrode assembly, an electrolyte, and a cell case. The electrode assembly in the cell case may include a positive electrode, a negative electrode, and a separator between the positive electrode and the negative electrode. The electrode assembly may be a jelly-roll type electrode assembly or a stack type electrode assembly according to a form of assembly. The jelly-roll type electrode assembly may include a structure in which a positive electrode, a negative electrode, and a separator between the positive and negative electrodes are wound together. The stack type electrode assembly may include a plurality of positive electrodes and a plurality of negative electrodes that are sequentially stacked, and a plurality of separators therebetween. The positive electrode may include a positive electrode current collector and a positive electrode active material. The negative electrode may include a negative electrode current collector and a negative electrode active material.

Each of the battery cells may be a pouch type battery cell, a cylindrical battery cell, or a prismatic battery cell. An electrode assembly of the pouch type battery cell is embedded in a pouch case including an aluminum laminate sheet. An electrode assembly of the cylindrical battery cell is embedded in a cylindrical metal can. An electrode assembly of the prismatic battery cell is embedded in a prismatic metal can.

The plurality of battery cells of each of the cell assemblies 200 may be connected in series and/or in parallel. For example, the battery cells may be connected to each other in series. For example, the battery cells may be connected to each other in parallel. For example, when a set of two or more battery cells connected in parallel is defined as a bank, one bank including two or more battery cells connected in parallel and another bank including two or more battery cells connected in parallel may be connected in series.

In embodiments, the plurality of battery cells of the cell assembly 200 may be arranged in the second horizontal direction (e.g., the Y-axis direction), and may each extend in the first horizontal direction (e.g., the X-axis direction). An electrode lead may be provided on an end portion of each of the battery cells in the second horizontal direction (e.g., the Y-axis direction). The electrode leads of neighboring battery cells among the plurality of battery cells may be electrically and physically connected to each other.

The plurality of cell assemblies 200 may include a first cell assembly 210 and a second cell assembly 230 that are spaced apart from each other in the second horizontal direction (e.g., the Y-axis direction) with the inner frame 140 therebetween.

The first cell assembly 210 may include a plurality of first battery cells 211 and a first side beam 220.

The plurality of first battery cells 211 may be thermally and physically coupled to the base frame 110 by a first thermally conductive adhesive layer 331. The first thermally conductive adhesive layer 331 may be provided between each of the plurality of first battery cells 211 and the base frame 110. The first thermally conductive adhesive layer 331 may include a thermal interface material or a thermal resin.

The first side beam 220 may be attached to an outermost first battery cell 211 among the plurality of first battery cells 211. For example, the first side beam 220 may be attached to the outermost first battery cell 211 among the plurality of first battery cells 211 via an adhesive member such as a double-sided tape or an adhesive. The first side beam 220 may be coupled to the inner frame 140 by interference fit. As the first side beam 220 is coupled to the inner frame 140, the first cell assembly 210 may be supported by the inner frame 140. For example, the first cell assembly 210 may include a pair of first side beams 220 spaced apart from each other with the plurality of first battery cells 211, and the pair of first side beams 220 may be coupled to different internal frames 140.

The first side beam 220 may include a first support plate 221 facing a first side surface 141 of the inner frame 140 and a first insertion block 223 connected to the first support plate 221. The first side beam 220 may be a single integrated structure in which the first support plate 221 and the first insertion block 223 are integrally formed.

The first support plate 221 may be attached to the outermost first battery cell 211 among the plurality of first battery cells 211 and be in contact with the first side surface 141 of the inner frame 140. The first support plate 221 may have a flat plate shape extending in the first horizontal direction (e.g., the X-axis direction) and a vertical direction (e.g., a Z-axis direction).

The inner frame 140 may include a first groove 151 into which the first insertion block 223 is inserted. The first groove 151 of the inner frame 140 may extend from the bottom surface 144 of the inner frame 140 to a top surface 143 of the inner frame 140 and penetrate the inner frame 140 in the vertical direction (e.g., the Z-axis direction). The inner frame 140 may have an inner space 147 extending in the first horizontal direction (e.g., the X-axis direction), and the first groove 151 of the inner frame 140 may communicate with the inner space 147 of the inner frame 140. The first groove 151 of the inner frame 140 may extend from the first side surface 141 of the inner frame 140 toward a second side surface 142 of the inner frame 140 but may not penetrate the inner frame 140 in the second horizontal direction (e.g., the Y-axis direction). In embodiments, the inner frame 140 may include a plurality of first grooves 151 spaced apart from each other in the first horizontal direction (e.g., the X-axis direction), and the first side beam 220 may include a plurality of first insertion blocks 223 inserted into the plurality of first grooves 151 of the inner frame 140.

The inner frame 140 may support the first side beam 220 in the first horizontal direction (e.g., the X-axis direction) and the second horizontal direction (e.g., the Y-axis direction). A height of the inner frame 140 may be the same or substantially the same as that of the first insertion block 223 in the vertical direction (e.g., the Z-axis direction). The inner frame 140 may be in surface contact with the first support plate 221 and support the first support plate 221 in the first horizontal direction (e.g., the X-axis direction). The inner frame 140 may be in surface contact with the first insertion block 223 and support the first insertion block 223 in the first horizontal direction (e.g., the X-axis direction) and the second horizontal direction (e.g., the Y-axis direction). The inner frame 140 may include a third support surface 161 supporting a side portion of the first insertion block 223 opposite to the first support plate 221, and first support surfaces 163 supporting both sides of the first insertion block 223 in the first horizontal direction (e.g., the X-axis direction). The first groove 151 of the inner frame 140 may be defined by the third support surface 161 and the first support surfaces 163.

A width of the first groove 151 of the inner frame 140 in the first horizontal direction (e.g., the X-axis direction) may increase as a distance from the first side surface 141 of the inner frame 140 increases. In the first horizontal direction (e.g., the X-axis direction), a width of a portion of the first groove 151 of the inner frame 140 connected to the first side surface 141 of the inner frame 140 may be a minimum width. In the first groove 151 of the inner frame 140, a width of the first insertion block 223 in the first horizontal direction (e.g., the X-axis direction) may increase as a distance from the first support plate 221 or the first side surface 141 of the inner frame 140 increases. In the first horizontal direction (e.g., the X-axis direction), a width of a portion of the first insertion block 223 connected to the first support plate 221 may be a minimum width. In this case, a movement of the first side beam 220 in the first horizontal direction (e.g., the X-axis direction) with respect to the inner frame 140 is restricted and thus a combination of the inner frame 140 and the first side beam 220 may be strengthened.

The first side beam 220 may be fastened to the base frame 110 by a first bolt 311. The first bolt 311 may be inserted into a through-hole of the first insertion block 223, and a lower portion of the first bolt 311 may be inserted into a groove of the base frame 110. The first bolt 311 may be coupled to the base frame 110 by engaging a screw thread of the lower portion of the first bolt 311 with a screw thread of the groove of the base frame 110. The first bolt 311 may be in the first groove 151 of the inner frame 140 and be spaced apart from the inner frame 140 with the first insertion block 223 interposed therebetween. Because the first side beam 220 is fastened to the base frame 110 by the first bolt 311, a movement of the first side beam 220 in the vertical direction (e.g., the Z-axis direction) may be restricted.

The second cell assembly 230 may include a plurality of second battery cells 231 and a second side beam 240.

The plurality of second battery cells 231 may be thermally and physically coupled to the base frame 110 by a second thermally conductive adhesive layer 333. The second thermally conductive adhesive layer 333 may be provided between each of the plurality of second battery cells 231 and the base frame 110. The second thermally conductive adhesive layer 333 may include a thermal interface material or a thermal resin.

The second side beam 240 may be attached to an outermost second battery cell 231 among the plurality of second battery cells 231. For example, the second side beam 240 may be attached to the outermost second battery cell 231 among the plurality of second battery cells 231 via an adhesive member such as a double-sided tape or an adhesive. The second side beam 240 may be coupled to the inner frame 140 by interference fit. As the second side beam 240 is coupled to the inner frame 140, the second cell assembly 230 may be supported by the inner frame 140. For example, the second cell assembly 230 may include a pair of second side beams 240 spaced apart from each other with a plurality of second battery cells 231 interposed therebetween, and the pair of second side beams 240 may be coupled to different internal frames 140.

The second side beam 240 may include a second support plate 241 facing the second side surface 142 of the inner frame 140 and a second insertion block 243 connected to the second support plate 241. The second side beam 240 may be a single integrated structure in which the second support plate 241 and the second insertion block 243 are integrally formed.

The second support plate 241 may be attached to the outermost second battery cell 231 among the plurality of second battery cells 231 and be in contact with the second side surface 142 of the inner frame 140. The second support plate 241 may have a flat plate shape extending in the first horizontal direction (e.g., the X-axis direction) and the vertical direction (e.g., the Z-axis direction).

The inner frame 140 may include a second groove 153 into which the second insertion block 243 is inserted. The second groove 153 of the inner frame 140 may extend from the bottom surface 144 of the inner frame 140 to the top surface 143 of the inner frame 140 and penetrate the inner frame 140 in the vertical direction (e.g., the Z-axis direction). The inner frame 140 may have the inner space 147 extending in the first horizontal direction (e.g., the X-axis direction), and the second groove 153 of the inner frame 140 may communicate with the inner space 147 of the inner frame 140. The second groove 153 of the inner frame 140 may extend from the second side surface 142 of the inner frame 140 toward the first side surface 141 of the inner frame 140 but may not penetrate the inner frame 140 in the second horizontal direction (e.g., the Y-axis direction). In embodiments, the inner frame 140 may include a plurality of second grooves 153 spaced apart from each other in the first horizontal direction (e.g., the X-axis direction), and the second side beam 240 may include a plurality of second insertion blocks 243 inserted into the plurality of second grooves 153 of the inner frame 140.

The second groove 153 of the inner frame 140 may be spaced apart from the first groove 151 of the inner frame 140 in the first horizontal direction (e.g., the X-axis direction), and the second insertion block 243 of the second side beam 240 inserted into the second groove 153 of the inner frame 140 may be spaced apart in the first horizontal direction (e.g., the X-axis direction) from the first insertion block 223 of the first side beam 220 inserted into the first groove 151 of the inner frame 140 with a portion of the inner frame 140 interposed therebetween . In embodiments, the inner frame 140 may include a plurality of first grooves 151 and a plurality of second grooves 153, and the first grooves 151 and the second grooves 153 may be alternately arranged in the first horizontal direction (e.g., the X-axis direction).

The inner frame 140 may support the second side beam 240 in the first horizontal direction (e.g., the X-axis direction) and the second horizontal direction (e.g., the Y-axis direction). A height of the inner frame 140 may be the same or substantially the same as that of the second insertion block 243 in the vertical direction (e.g., the Z-axis direction). The inner frame 140 may be in surface contact with the second support plate 241 and support the second support plate 241 in the first horizontal direction (e.g., the X-axis direction). The inner frame 140 may be in surface contact with the second insertion block 243 and support the second insertion block 243 in the first horizontal direction (e.g., the X-axis direction) and the second horizontal direction (e.g., the Y-axis direction). The inner frame 140 may include a fourth support surface 165 supporting a side portion of the second insertion block 243 opposite to the second support plate 241, and second support surfaces 167 supporting both sides of the second insertion block 243 in the first horizontal direction (e.g., the X-axis direction). The second groove 153 of the inner frame 140 may be defined by the fourth support surface 165 and the second support surfaces 167.

A width of the second groove 153 of the inner frame 140 in the first horizontal direction (e.g., the X-axis direction) may increase as a distance from the second side surface 142 of the inner frame 140 increases. In the first horizontal direction (e.g., the X-axis direction), a width of a portion of the second groove 153 of the inner frame 140 connected to the second side surface 142 of the inner frame 140 may be a minimum width. In the second groove 153 of the inner frame 140, a width of the second insertion block 243 in the first horizontal direction (e.g., the X-axis direction) may increase as a distance from the second support plate 241 or the second side surface 142 of the inner frame 140 increases. In the first horizontal direction (e.g., the X-axis direction), a width of a portion of the second insertion block 243 connected to the second support plate 241 may be a minimum width. In this case, a movement of the second side beam 240 in the first horizontal direction (e.g., the X-axis direction) with respect to the inner frame 140 is restricted and thus a combination of the inner frame 140 and the first side beam 220 may be strengthened.

The second side beam 240 may be fastened to the base frame 110 by a second bolt 313. The second bolt 313 may be inserted into a through-hole of the second insertion block 243, and a lower portion of the second bolt 313 may be inserted into a groove of the base frame 110. The second bolt 313 may be coupled to the base frame 110 by engaging a screw thread of the lower portion of the second bolt 313 with a screw thread of the groove of the base frame 110. The second bolt 313 may be in the second groove 153 of the inner frame 140 and be spaced apart from the inner frame 140 with the second insertion block 243 interposed therebetween. Because the second side beam 240 is fastened to the base frame 110 by the second bolt 313, a movement of the second side beam 240 in the vertical direction (e.g., the Z-axis direction) may be restricted.

### (Second embodiment)

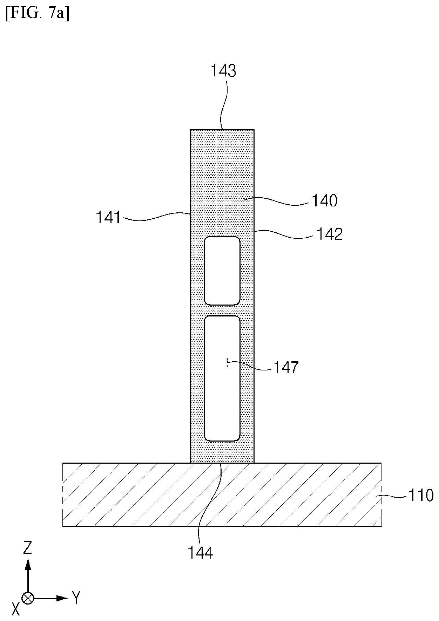

FIGS. 7a to 7c are cross-sectional views illustrating a manufacturing method of a battery pack 10 according to embodiments of the present disclosure. Hereinafter, the manufacturing method of the battery pack 10 according to embodiments will be described with reference to FIGS. 1 to 6 and 7a to 7c.

Referring to FIG. 7a, an inner frame 140 is provided on a base frame 110. For example, the inner frame 140 may be coupled to the base frame 110 by welding.

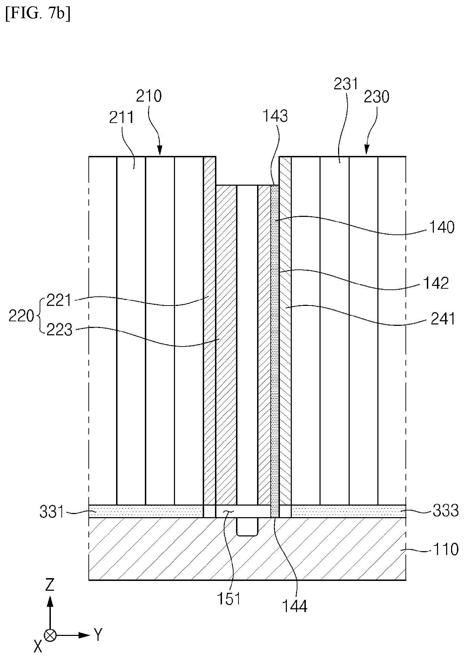

Referring to FIG. 7b, after the inner frame 140 is provided on the base frame 110, a plurality of cell assemblies 200 are mounted on the base frame 110. The mounting of the plurality of cell assemblies 200 on the base frame 110 may include preparing a first cell assembly 210 including a plurality of first battery cells 211 and a first side beam 220 and a second cell assembly 230 including a plurality of second battery cells 231 and a first side beam 220, assembling the first side beam 220 to the inner frame 140, and assembling the second side beam 240 to the inner frame 140.

The assembling of the first side beam 220 to the inner frame 140 may include aligning a first insertion block 223 of the first side beam 220 to a first groove 151 of the inner frame 140 in the vertical direction (e.g., the Z-axis direction), and moving the first cell assembly 210 including the first side beam 220 in the vertical direction (e.g., the Z-axis direction) to insert the first insertion block 223 of the first side beam 220 into the first groove 151 of the inner frame 140.

The assembling of the second side beam 240 to the inner frame 140 may include aligning a second insertion block 243 of the second side beam 240 to a second groove 153 of the inner frame 140 in the vertical direction (e.g., the Z-axis direction), and moving the second cell assembly 230 including the second side beam 240 in the vertical direction (e.g., the Z-axis direction) to insert the second insertion block 243 of the second side beam 240 into the second groove 153 of the inner frame 140.

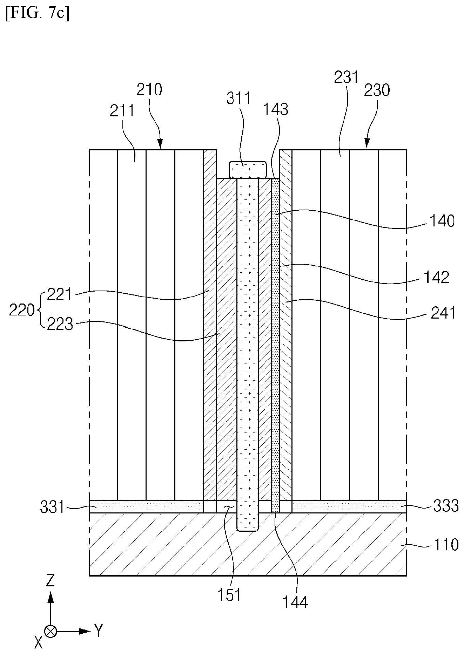

Referring to FIG. 7c, the first side beam 220 and the second side beam 240 are fastened to the base frame 110 by bolting coupling. The first side beam 220 may be fixed to the base frame 110 by fastening the first insertion block 223 to the base frame 110 by a first bolt 311. The second side beam 240 may be fixed to the base frame 110 by fastening the second insertion block 243 to the base frame 110 by a second bolt 313. After the first side beam 220 and the second side beam 240 are fastened to the base frame 110, a pack cover 130 is fastened to a side frame 120.

According to embodiments of the present disclosure, a side beam of the cell assembly 200 may be assembled to the inner frame 140 inside a pack frame 100 by interference fit. The side beam of the cell assembly 200 and the inner frame 140 can be assembled together without a fastening member such as a bolt, thus facilitating the assembling of the battery pack 10.

According to embodiments of the present disclosure, because the inner frame 140 of the pack frame 100 is in surface contact with the side beam of the cell assembly 200 to support the side beam of the cell assembly 200 in a lateral direction, damage to the side beam due to an external force applied due to the swelling of battery cells can be prevented or suppressed. The reliability and safety of the battery pack 10 can be improved by preventing or suppressing damage to the components in the battery pack 10.

According to embodiments of the present disclosure, because the inner frame 140 of the pack frame 100 may be in surface contact with the side beam of the cell assembly 200 to supports the side beam of the cell assembly 200 in the lateral direction, a force applied between the side beam of the cell assembly 200 and the inner frame 140 can be dispersed and the side beam can be prevented or suppressed from being damaged during the mounting of the cell assembly 200 on the pack frame 100. The reliability and safety of the battery pack 10 can be improved by preventing or suppressing damage to the components in the battery pack 10.

The present disclosure has been described above in more detail with reference to the drawings, the embodiments, etc. However, the configurations illustrated in the drawings or embodiments described in the present specification are only examples of the present disclosure and do not reflect all the technical ideas of the present disclosure and thus it should be understood that various equivalents and modifications that replace the configurations would have been made at the filing date of the present application.

## Claims

1. A battery pack comprising:
a base frame;
an inner frame extending on the base frame in a first direction;
a first cell assembly including a plurality of first battery cells and a first side beam, wherein the first side beam includes a first support plate facing a first side surface of the inner frame and a first insertion block connected to the first support plate; and
a second cell assembly including a plurality of second battery cells and a second side beam, wherein the second side beam includes a second support plate facing a second side surface of the inner frame and a second insertion block connected to the second support plate,
wherein the inner frame comprises:
a first groove which extends from the first side surface of the inner frame and into which the first insertion block is inserted; and
a second groove which extends from the second side surface of the inner frame and into which the second insertion block is inserted.

2. The battery pack of claim 1, wherein the plurality of first battery cells are arranged in a second direction perpendicular to the first direction, and
the plurality of second battery cells are arranged in the second direction.

3. The battery pack of claim 2, wherein the first support plate of the first side beam is attached to an outermost first battery cell among the plurality of first battery cells, and
the second support plate of the second side beam is attached to an outermost second battery cell among the plurality of second battery cells.

4. The battery pack of claim 1, wherein the inner frame has a bottom surface in contact with the base frame and a top surface opposite to the bottom surface, and
each of the first groove and the second groove of the inner frame extends from the bottom surface of the inner frame to the top surface of the inner frame.

5. The battery pack of claim 1, wherein the first groove and the second groove of the inner frame are spaced apart from each other in the first direction.

6. The battery pack of claim 1, wherein a width of the first groove of the inner frame in the first direction increases as a distance from the first side surface of the inner frame increases, and
a width of the second groove of the inner frame in the first direction increases as a distance from the second side surface of the inner frame increases.

7. The battery pack of claim 6, wherein, in the first groove of the inner frame, a width of the first insertion block in the first direction increases as a distance from the first support plate increases, and
in the second groove of the inner frame, a width of the second insertion block in the first direction increases as a distance from the second support plate increases.

8. The battery pack of claim 1, wherein the inner frame comprises:
first support surfaces supporting both sides of the first insertion block in the first direction; and
second support surfaces supporting both sides of the second insertion block in the first direction.

9. The battery pack of claim 8, wherein the inner frame further comprises:
a third support surface supporting a side portion of the first insertion block opposite to the first support plate; and
a fourth support surface supporting a side portion of the second insertion block opposite to the second support plate.

10. The battery pack of claim 1, further comprising:
a first bolt configured to fasten the first insertion block to the base frame; and
a second bolt configured to fasten the second insertion block to the base frame.

11. The battery pack of claim 10, wherein the first bolt is spaced apart from the inner frame with the first insertion block between the first bolt and the inner frame, and the second bolt is spaced apart from the inner frame with the second insertion block between the second bolt and the inner frame.

12. The battery pack of claim 1, wherein the inner frame further includes an inner space extending in the first direction,
wherein the first groove and the second groove of the inner frame communicate with the inner space of the inner frame.

13. The battery pack of claim 1, wherein the first side beam is a single integrated structure in which the first support plate and the first insertion block are integrally formed, and
the second side beam is a single integrated structure in which the second support plate and the second insertion block are integrally formed.

14. The battery pack of claim 1, further comprising:
a first thermally conductive adhesive layer configured to attach the plurality of first battery cells to the base frame; and
a second thermally conductive adhesive layer configured to attach the plurality of second battery cells to the base frame.

15. The battery pack of claim 1, further comprising:
a side frame provided on the base frame and connected to the inner frame; and
a pack cover configured to cover the first cell assembly and the second cell assembly and to be fastened to the side frame.
